# EUROPÄISCHE PATENTSCHRIFT

(11) **EP 1 213 184 B1**
(45) Veröffentlichungstag und Bekanntmachung des Hinweises auf die Patenterteilung: **28.01.2004**
(21) Anmeldenummer: 99974026.9
(22) Anmeldetag: 30.09.1999
(51) Int. Cl.: B60R 1/08, B60R 1/06

(54) **VIELGEKRÜMMTER FAHRZEUGRÜCKBLICKSPIEGEL OHNE TOTWINKEL**
A MULTI-CURVED AND NON-BLIND-ZONE OUTLAY REAR-VIEW MIRROR FOR VEHICLE
RETROVISEUR D'AUTOMOBILE MULTICOURBURE SANS ANGLE MORT

(30) Priorität: 17.09.1999 CN 99244616
(43) Veröffentlichungstag der Anmeldung: 12.06.2002
(73) Patentinhaber: Zhang, Jinhai, Haidian District, Beijing 100084 (CN); Feng, Shula, Yiw City, Zhejiang Province 322000 (CN)
(72) Erfinder: Zhang, Jinhai, Haidian District, Beijing 100084 (CN); Feng, Shula, Yiw City, Zhejiang Province 322000 (CN)
(74) Vertreter: Heitsch, Wolfgang
(86) Internationale Anmeldenummer: PCT/CN1999/000156
(87) Internationale Veröffentlichungsnummer: WO 2001/021440

(56) Entgegenhaltungen:
- EP-A- 0 773 457
- CN-Y- 2 185 511
- CN-Y- 2 216 482
- CN-Y- 2 268 653
- DE-A- 19 537 902
- US-A- 4 436 372

## Beschreibung

Diese Erfindung bezieht sich auf eine optische Beobachtungseinrichtung für Kraftfahrzeuge, insbesondere Fahrzeug-Außenrückspiegel.

Vorhandene optische Beobachtungseinrichtungen für Kraftfahrzeuge unterteilen sich im wesentlichen in folgende zwei Kategorien: Erstens in Kugelspiegel, auch als Spiegel mit Einfachkrümmung bezeichnet, und zweitens in Flachspiegel. Die erste Kategorie verfügt über ein breites Blickfeld, weist jedoch starke Verzerrungen des Bildes auf und bietet ein mangelhaftes Entfernungsgefühl, was zu Täuschungen führt. Die zweite Kategorie erlaubt einen weiten Blick mit deutlichem Bild und ohne Verzerrungen, verfügt jedoch über ein enges Blickfeld, mit dem die toten Winkel für Fahrzeuge mit ein Frontlinie angeordneten Fahrzeugaussenspiegel (z.B, Busse; LKW) insbesondere von und neben dem Fahrzeug bzw. bei Bussen und Lastkraftwagen in der Nähe der beiden Vorderräder nicht einzusehen sind. Diese Nachteile bringen für den Fahrer Schwierigkeiten und Gefahren beim Fahrspurwechsel und beim Wenden mit sich, die sogar zu Verkehrsunfällen führen. Für große und mittlere Busse ist die Gefährdung durch diese Nachteile besonders stark. Laut statistischen Angaben ereignen sich etwa 20 % bis 30 % der Unfälle wegen dieser toten Winkel. Zur Lösung dieses Problems wurden bereits viele Überlegungen angestellt. Ein Ergebnis davon sind die Fahrzeug-Außenrückspiegel, die in den Chinesischen Patenten CN90206894.6 und CN94207489.0 öffentlich bekannt gemacht wurden. Ihre Spiegelfläche besteht aus einer komplexen Krümmung, die durch mehrere stufenlos verbundene Flächen mit unterschiedlichen Krümmungsradien gebildet wird. Die Krümmungsradien werden von oben nach unten immer kleiner. Der Krümmungsradius in der oberen Hälfte der Spiegelfläche ist sehr groß. Der Krümmungsradius in der unteren Hälfte verringert sich nicht nur von oben nach unten, sondern auch von einer Seite zur anderen. Ein solcher Rückspiegel weist die Vorteile einer hohen Deutlichkeit des Bildes und eines breiten Blickfeldes auf. Aufgrund seines unsymmetrischen Aufbaus unterteilt er sich in einen linken und rechten Spiegel. Bei paarweiser Verwendung können die toten Winkel zu beiden Seiten des Fahrzeugs beseitigt werden. Der tote Winkel vor dem Fahrzeug bleibt jedoch bestehen. Der zweite Typ besteht in der gleichzeitigen Montage eines Rundkonvexspiegels und eines Rückspiegels. Der Fahrer muss unterschiedliche Spiegel beobachten, um die toten Winkel vor dem Fahrzeug z.B. bei Bussen und LKW bis zu beiden Seiten zu überwachen.

Aufgabe der Erfindung ist es deshalb, die Nachteile des Standes der Technik zu überwinden und eine optische Beobachtungseinrichtung für Kraftfahrzeuge vorzuschlagen, die ein breites Blickfeld und ein deutliches Bild bietet, mit der die toten Winkel seitlich eines Fahrzeugs und vor einem Fahrzeug mit flacher Front beseitigt werden und die außerdem noch die Positionsbeziehung zwischen einem nachfolgenden Fahrzeug und dem eigenen Fahrzeug anzeigen kann.

Diese Aufgabenstellung wird erfindungsgemäß dadurch gelöst, dass eine optische Beobachtungseinrichtung für Kraftfahrzeuge, insbesondere Fahrzeug-Außenrückspiegel, aus mehreren gekrümmten Flächen mit unterschiedlichen Krümmungsradien, die stufenlos miteinander verbunden sind, besteht. Den mittleren Teil der Spiegelfläche bildet eine querparabelartige Mittelachse, deren rechtes Ende den Mittelpunkt darstellt. Dieser Mittelpunkt ist der Punkt mit dem kleinsten Krümmungsradius. Das linke Ende der Quermittellinie, die durch diesen Mittelpunkt verläuft, bildet den Punkt mit dem größten Krümmungsradius. Die Gesetzmäßigkeit der Spiegelkrümmungsfläche links von diesem Mittelpunkt besteht darin, dass die Änderungen der Krümmungsradien senkrecht zur Quermittellinie oberhalb dieser Quermittellinie nach oben und nach unten bis zur querparabelartigen Mittelachse von groß zu klein und danach von klein zu groß verlaufen. Die Gesetzmäßigkeit der Spiegelkrümmungsfläche rechts vom Mittelpunkt besteht darin, dass die Änderungen der Krümmungsradien senkrecht zur Quermittellinie oberhalb dieser Quermittellinie nach oben und nach unten von klein zu groß verlaufen. Die Gesetzmäßigkeit der gekrümmten Fläche von links nach rechts auf der Spiegelfläche besteht darin, dass die Änderungen von groß zu klein sowie von klein zu groß verlaufen. Dabei liegt die Position dieses Mittelpunkts an einer Stelle auf der Quermittellinie zwischen ein halb bis zwei drittel von links nach rechts.

Die äußeren Konturen dieser Spiegelfläche können stromlinienförmig links schmal und rechts breit gestaltet werden. Diese stromlinienförmige Gestaltung stellt sich als eine komplexe Kurve dar, die aus mehreren stufenlos verbundenen Kurven mit unterschiedlichen Radien gebildet wird, wobei sich der Krümmungsradius von links nach rechts allmählich verringert. Die äußeren Konturen dieser Spiegelfläche können außerdem quadratisch, oben gerade und unten gebogen oder unten gerade und oben gebogen stromlinienförmig gestaltet werden.
Auf der Spiegelfläche der optischen Beobachtungseinrichtung für Kraftfahrzeuge können außerdem Markierungspunkte angebracht werden, zum Beispiel für Gefahrenzonen, Warnzonen und Sicherheitszonen, die es dem Fahrer ermöglichen, im Spiegel die Positionsbeziehung zwischen nachfolgenden Fahrzeugen und dem eigenen Fahrzeug zu beurteilen.
Wird der Spiegel so angeordnet, dass die Quermittellinie horizontal liegt, kann dieser für kleine Fahrzeuge verwendet werden. Wird der Spiegel so angeordnet, dass die Quermittellinie vertikal liegt, d.h. der Spiegel um 90° gedreht ist, kann dieser für große Fahrzeuge verwendet werden.

Nach dem Prinzip der optischen Reflexion von Fahrzeugrückspiegeln, wonach oben Femsicht und unten Nahsicht ermöglicht wird, erscheint das Bild eines nachfolgenden Fahrzeugs bei großem Abstand vom eigenen Fahrzeug in der rechten Spiegelfläche des mittleren Teils dieses Rückspiegels klar und deutlich. Mit abnehmender Entfernung des nachfolgenden Fahrzeugs vom eigenen Fahrzeug bewegt sich das Bild im Spiegel nach links. Wenn links und rechts jeweils ein Vollsichtspiegel angebracht wird, kann der Fahrer aufgrund der oben beschriebenen Eigenschaften der Spiegelfläche nicht nur im Spiegel einen breiten Bereich beidseitig des Fahrzeugs links und rechts, vom und hinten überwachen. Gleichzeitig ist es ihm möglich, den toten Winkel, als der er früher gehalten wurde, vor dem Fahrzeug ganz vor Augen zu haben.

Die optische Beobachtungseinrichtung für Kraftfahrzeuge zeichnet sich gegenüber vorhandenen Rückspiegeln mit großem Blickfeld durch folgende Vorteile aus: Verbreiterung des Blickfeldes bei einem deutlich bleibenden Bild; nicht nur Beseitigung der toten Winkel an beiden Seiten des Fahrzeugs, sondern gleichzeitig auch Beseitigung des toten Winkels vor dem Fahrzeug z.B. für Fahrzeuge mit in Frontlinie angeordneten Fahrzeugaussenspiegel (z.B. Busse und LKW), besseres Gefühl der Entfernung durch Veränderung der gekrümmten Fläche führt zu erleichterter Beobachtung und Beurteilung durch den Fahrer; keine Verformung des Bildes im Spiegel und Schwindelfreiheit beim Blick nach hinten.

Tote Winkel vor Fahrzeugen in diesem Text beziehen sich vor allem auf tote Winkel vor großen Fahrzeugen mit flacher Front wie Busse und LKW.

Die Merkmale der Erfindung gehen außer aus den Ansprüchen aus der Beschreibung und den Zeichnungen hervor. Ausführungsbeispiele der Erfindung sind in den Zeichnungen dargestellt und werden im folgenden näher erläutert.

In den Zeichnungen zeigen:
- Fig. 1: die Hauptansicht einer optischen Beobachtungseinrichtung für Kraftfahrzeuge für kleine Fahrzeuge,
- Fig. 2: eine Draufsicht von Fig. 1,
- Fig. 3: eine Profilansicht senkrecht zur Quermittellinie durch den Mittelpunkt,
- Fig.4: eine Hauptansicht eines Außenrückspiegels mit Mehrfachkrümmung ohne tote Winkel für große Fahrzeuge,
- Fig. 5: eine Hauptansicht einer optischen Beobachtungseinrichtung für Kraftfahrzeuge mit Markierungspunkten.

### Beispiel 1:

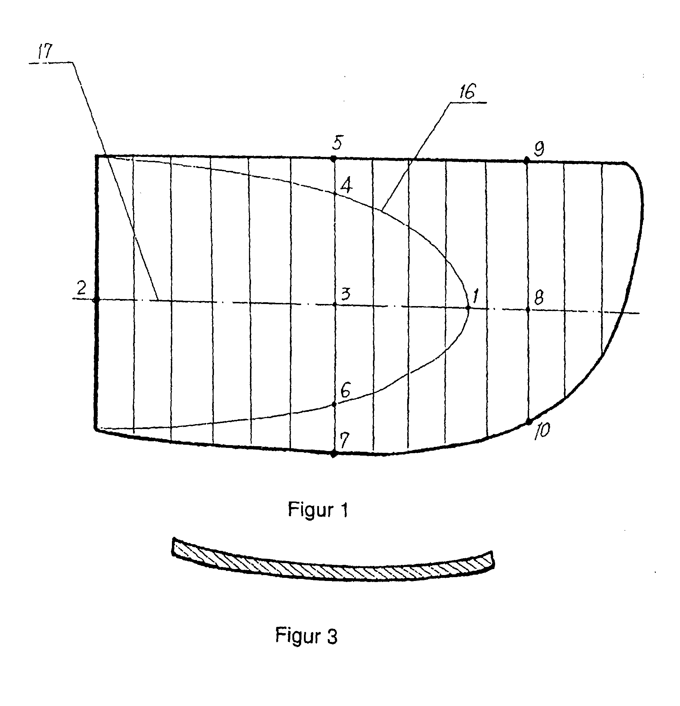

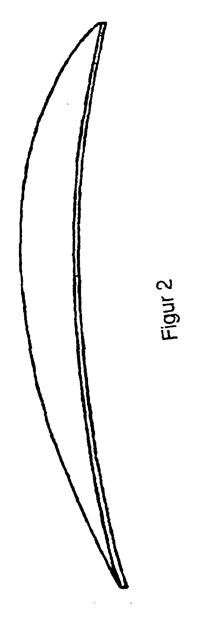

Wie in Figur 1 dargestellt, wird die Spiegelfläche durch stufenlose Verbindung von mehreren gekrümmten Flächen mit unterschiedlichen Krümmungsradien gebildet. Den mittleren Teil der Spiegelfläche bildet die querparabelartige Mittelachse **16,** deren rechtes Ende den Mittelpunkt **1** darstellt. Dieser Mittelpunkt **1** ist der Punkt des kleinsten Krümmungsradius. Das linke Ende der Quermittellinie **17,** die durch diesen Mittelpunkt **1** verläuft, bildet den Punkt **2** des größten Krümmungsradius. Die Gesetzmäßigkeit der Spiegelkrümmungsfläche links vom Mittelpunkt **1** besteht darin, dass die Änderungen der Krümmungsradien senkrecht zur Quermittellinie **17** oberhalb dieser Quermittellinie **17** nach oben (von **3** nach **4**) und nach unten (von **3** nach **6)** bis zur querparabelartigen Mittelachse **16** von groß zu klein und danach jeweils von klein zu groß (von **4** nach **5** und von **6** nach **7)** verlaufen. Die Gesetzmäßigkeit der Spiegelkrümmungsfläche rechts vom Mittelpunkt **1** besteht darin, dass die Änderungen der Krümmungsradien senkrecht zur Quermittellinie **17** nach oben (von **8** nach **9**) und nach unten (von **8** nach **10**) von klein zu groß verlaufen. Die Gesetzmäßigkeit der gekrümmten Fläche von links nach rechts auf der gesamten Spiegelfläche besteht darin, dass die Änderungen von groß zu klein (von **2** nach **1**) sowie von klein zu groß (von **1** nach **8**) verlaufen. Die äußeren Konturen der Spiegelfläche in diesem Ausführungsbeispiel sind stromlinienförmig links schmal und rechts breit ausgestaltet, wie die Figur 2 zeigt. Ihr Aufbau besteht aus komplexen Kurven, die durch mehrere stufenlos verbundene Kurven mit unterschiedlichen Radien gebildet werden. Die Kurvenradien verringern sich gesetzmäßig von links nach rechts. Das heißt, die linken Außenkonturen kennzeichnen den Abschnitt der gekrümmten Fläche mit großen Radien, die rechten Außenkonturen kennzeichnen den Abschnitt der gekrümmten Fläche mit kleinen Radien.
Aus dem Ausführungsbeispiel **1** ergibt sich, dass die Konstruktion des Spiegels unsymmetrisch ist. Der beschriebene rechte Außenspiegel kann demnach nicht als linker Außenspiegel verwendet werden. Als linker Außenspiegel kommt ein zum rechten Außenspiegel spiegelbildlich gestalteter Spiegel zur Anwendung. Figur 1 zeigt den rechten Spiegel. Von der Vorderseite des Spiegels aus betrachtet, ist die Breite des Spiegels am Mittelpunkt **1** größer als die Breite des Spiegels am Punkt **2**, um den toten Winkel vor dem Fahrzeug zu beseitigen.

### Beispiel 2:

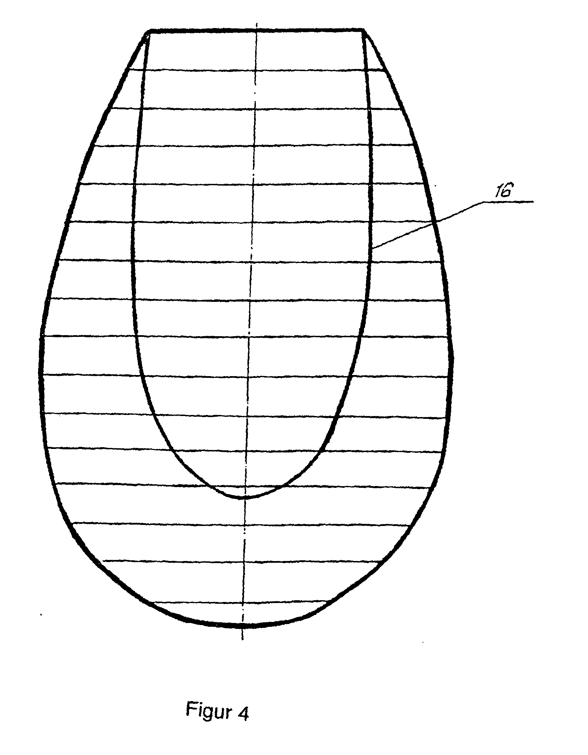

In Abwandlung zum ersten Ausführungsbeispiel ist, wie in Figur 4 dargestellt, die gekrümmte Spiegelfläche von der Mitte zu beiden Seiten hin annähernd symmetrisch oder völlig symmetrisch konstruiert. Dann sind auch die Außenkonturen der Spiegelfläche annähernd oder völlig symmetrisch. Der Spiegel unterteilt sich nicht in einen linken und rechten Spiegel. Er ist einfach herzustellen und zu montieren und geeignet zur Verwendung an großen Fahrzeugen.

### Beispiel 3:

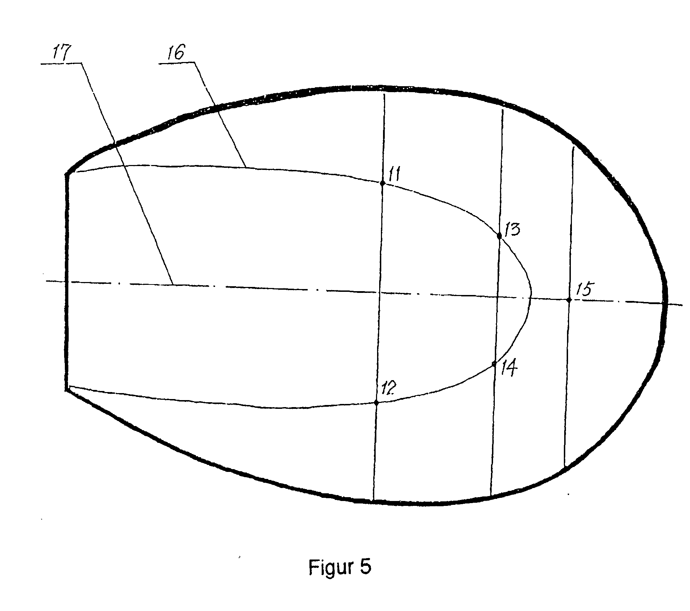

In Abwandlung zu Beispiel 1 oder 2 sind, wie in Figur 5 gezeigt wird, auf der Spiegelfläche einige Markierungspunkte angebracht, die jeweils positionsbezogene Referenzpunkte für die Gefahrenzonen **11** und **12,** die Warnzonen **13** und **14** sowie die Sicherheitszone **15** darstellen. Wenn der Fahrer im Spiegel ein Fahrzeug oder einen Körper auftauchen sieht, kann er die Lage des Nachfolgenden vom eigenen Fahrzeug beurteilen.

## Patentansprüche

1. Optische Beobachtungseinrichtung für Kraftfahrzeuge,
- einer Spiegelfläche aus mehreren stufenlos miteinander verbundenen, ineinanderübergehenden gekrümmten Flächen mit unterschiedlichen Krümmungsradien
**dadurch gekennzeichnet, daß**
- der mittlere Teil des Spiegels durch eine querparabelartige Mittelachse (**16**) gebildet wird, deren rechtes Ende den Mittelpunkt (**1**) darstellt, wobei dieser Mittelpunkt (**1**) den Punkt des kleinsten Krümmungsradius bildet,
- das linke Ende einer Quermittellinie (**17**), die durch diesen Mittelpunkt (1) verläuft, den Punkt (**2**) mit dem größten Krümmungsradius bildet,
- die Spiegelkrümmungsfläche links vom Mittelpunkt (1) so ausgestaltet ist, dass die Änderungen der Krümmungsradien senkrecht zur Quermittellinie **(17)** oberhalb dieser Quermittellinie **(17)** nach oben und nach unten bis zur querparabelartigen Mittelachse (16) von groß zu klein und danach von klein zu groß verlaufen,
- die Spiegelkrümmungsfläche rechts vom Mittelpunkt **(1)** so ausgestaltet ist, dass die Änderungen der Krümmungsradien senkrecht zur Quermittellinie **(17)** oberhalb dieser Quermittellinie **(17)** nach oben und nach unten von klein zu groß verlaufen, und
- die gekrümmte Fläche auf der Spiegelfläche von links nach rechts so ausgestaltet ist, dass die Änderungen von groß zu klein (bis Mittelpunkt **(1)** sowie von klein zu groß nach dem Mittelpunkt **(1)** verlaufen.

2. Optische Beobachtungseinrichtung für Kraftfahrzeuge nach Anspruch 1, **dadurch gekennzeichnet, dass** die Position des Mittelpunkts (**1**) an einer Stelle auf der Quermittellinie (17) zwischen ein halb bis zwei drittel von links nach rechts befindet.

3. Optische Beobachtungseinrichtung für Kraftfahrzeuge nach Anspruch 1, **dadurch gekennzeichnet, dass** die Außenkonturen der Spiegelfläche stromlinienförmig links schmal und rechts breit gestaltet wurden, dabei stellt sich diese stromlinienförmige Gestaltung als eine aus mehreren Kurven mit unterschiedlichen Radien stufenlos verbundene komplexe Kurve dar.

4. Optische Beobachtungseinrichtung für Kraftfahrzeuge nach Anspruch 1, **dadurch gekennzeichnet, dass** die Außenkonturen der Spiegelfläche quadratisch, oben gerade und unten gebogen oder unten gerade und oben gebogen stromlinienförmig gestaltet wurden.

5. Optische Beobachtungseinrichtung für Kraftfahrzeuge nach Anspruch 1, **dadurch gekennzeichnet, dass** die Spiegelfläche mit einigen Markierungspunkten für Gefahrenzonen (**11,12**), Wamzonen (**13,14**) und Sicherheitszonen (**15**) versehen ist.

## Claims

1. Optical observing device for motor vehicles, having a reflecting surface made from a plurality of curved surfaces which are smoothly connected to one another, merge into one another and have different radii of curvature, **characterized in that**
- the middle part of the mirror is formed by a central axis (16) of the type of a transverse parabola, whose right-hand end constitutes the mid-point (1), this mid-point (1) forming the point of the least radius of curvature,
- the left-hand end of a transverse centre line (17) which runs through this mid-point (1) forms the point (2) with the greatest radius of curvature,
- the mirror curved surface to the left of the mid-point (1) is configured such that the changes in the radii of curvature perpendicular to the transverse centre line (17) extend, above this transverse centre line (17), upwards and downwards as far as the central axis (16) of the type of a transverse parabola, doing so from large to small and thereafter from small to large,
- the mirror curved surface to the right of the mid-point (1) is configured such that the changes in the radii of curvature perpendicular to the transverse centre line (17) run above this transverse centre line (17), upwards and downwards from small to large, and
- the curved surface on the reflecting surface is configured from left to right such that the changes from large to small extend up to the mid-point (1), and those from small to large extend after the mid-point (1).

2. Optical observing device for motor vehicles according to Claim 1, **characterized in that** the position of the mid-point (1 ) is located between a half and two thirds from left to right at a point on the transverse centre line (17).

3. Optical observing device for motor vehicles according to Claim 1, **characterized in that** the outer contours of the reflecting surface are shaped in a streamlined fashion to be narrow on the left and wide on the right, this streamlined shaping constituting a complex curve which is smoothly connected from a plurality of curves of different radii.

4. Optical observing device for motor vehicles according to Claim 1, **characterized in that** the outer contours of the reflecting surface are shaped in a streamlined fashion to be square, straight above and bent below, or straight below and bent above.

5. Optical observing device for motor vehicles according to Claim 1, **characterized in that** the reflecting surface is provided with a few marking points for danger zones (11, 12), warning zones (13,14) and safety zones (15).

## Revendications

1. Dispositif d'observation optique pour véhicules automobiles comprenant une surface de miroir constituée de plusieurs surfaces courbes connectées de manière continue les unes aux autres et se prolongeant les unes dans les autres, avec des rayons de courbure différents, **caractérisé en ce que**
- la partie centrale du miroir est formée par un axe médian (16) de type parabolique transversal, dont l'extrémité droite représente le centre (1), ce centre (1) formant le point de plus petit rayon de courbure,
- l'extrémité gauche d'une ligne de milieu transversale (17), qui passe par ce centre (1), forme le point (2) de plus grand rayon de courbure,
- la surface de courbure du miroir à gauche du centre (1) est configurée de telle sorte que les variations des rayons de courbure perpendiculairement à la ligne de milieu transversale (17) s'étendent au-dessus de cette ligne de milieu transversale (17) vers le haut et vers le bas jusqu'à l'axe médian de type parabolique transversal (16) en variant de grandes à petites puis de petites à grandes,
- la surface de courbure du miroir à droite du centre (1) est configurée de telle sorte que les variations des rayons de courbure perpendiculairement à la ligne de milieu transversale (17) s'étendent au-dessus de cette ligne de milieu transversale (17) vers le haut et vers le bas en variant de petites à grandes, et
- la surface courbe sur la surface de miroir de gauche à droite est configurée de telle sorte que les variations varient de grandes à petites jusqu'au centre (1) et de petites à grandes après le centre (1).

2. Dispositif d'observation optique pour véhicules automobiles selon la revendication 1, **caractérisé en ce que** la position du centre (1) à un emplacement sur la ligne de milieu transversale (17) se trouve entre la moitié et deux tiers de gauche à droite.

3. Dispositif d'observation optique pour véhicules automobiles selon la revendication 1, **caractérisé en ce que** les contours extérieurs de la surface de miroir ont été configurés en forme de lignes de flux étroites à gauche et larges à droite, cette configuration en forme de lignes de flux se présentant sous forme d'une courbe complexe assemblée de manière continue à partir de plusieurs courbes de rayons différents.

4. Dispositif d'observation optique pour véhicules automobiles selon la revendication 1, **caractérisé en ce que** les contours extérieurs de la surface de miroir ont été configurés de manière quadratique en forme de lignes de flux droites en haut et courbes en bas ou droites en bas et courbes en haut.

5. Dispositif d'observation optique pour véhicules automobiles selon la revendication 1, **caractérisé en ce que** la surface de miroir est pourvue de quelques points de marquage pour des zones de danger (11, 12), des zones d'avertissement (13, 14) et des zones de sécurité (15).
